# EUROPEAN PATENT APPLICATION

(11) **EP 3 096 205 A1**
(43) Date of publication of application: **23.11.2016**
(21) Application number: 16161895.4
(22) Date of filing: 23.03.2016
(51) Int. Cl.: G06F 3/01

(54) **PORTABLE DISPLAY DEVICE, DISPLAY SYSTEM AND DISPLAY METHOD**

(30) Priority: 21.05.2015 JP 2015103473
(71) Applicant: Seiko Epson Corporation, Shinjuku-ku Tokyo (JP)
(72) Inventor: TSUJIOKA, Nobuhiro, Suwa-shi, Nagano 392-8502 (JP)
(74) Representative: Miller Sturt Kenyon

(57) **Abstract**

A portable display device includes a portable main body including a display section capable of displaying display data; an object direction confirmation section configured to confirm an object direction from the main body to an object; a viewing direction recognition section configured to recognize a viewing direction for viewing through the display section; and a management section configured to dispose the display data in a virtual display area wider than a display area of the display section, wherein the management section displays a part of the virtual display area in accordance with a viewing angle, which is an angle between the object direction and the viewing direction, to the display section.

## Description

### BACKGROUND

### 1. Technical Field

The present invention relates to a technique for displaying display data to a display section disposed on a portable main body.

### 2. Related Art

To date, a portable HMD (Head Mounted Display) that is wearable on the head of an operator has been known. Also, JP-A-2013-168910 discloses a technique for changing applications to be used with the HMD depending on a direction of the HMD.

JP-A-2013-168910 is an example of related art.

Incidentally, it is thought that a portable display device, such as an HMD is used for supporting an operator in performing a predetermined operation. For example, display data indicating operation contents is displayed to a portable display device worn by an operator so that it is possible for the operator to confirm the operation contents while the operator is viewing an object of the operation through the portable display device.

However, the position of an object in a field of view of an operator through a portable display device changes in accordance with the direction of the field of view of the operator. Accordingly, when displaying display data on the portable display device, a suitable display mode is demanded in consideration of this point. On the other hand, the technique in JP-A-2013-168910 causes applications to be changed in accordance with the direction of an HMD, and does not give any knowledge about the display mode of display data in accordance with the direction of the field of view of the operator in particular.

### SUMMARY

An advantage of some aspects of the invention is to provide a technique that enables displaying display data on a portable display device in a display mode in accordance with the direction of the field of view of an operator.

According to an aspect of the invention, there is provided a portable display device. The portable display device includes: a portable main body including a display section capable of displaying display data; an object direction confirmation section configured to confirm an object direction from the main body to an object; a viewing direction recognition section configured to recognize a viewing direction for viewing through the display section; and a management section configured to dispose the display data in a virtual display area wider than a display area of the display section. In the portable display device, the management section displays a part of the virtual display area in accordance with a viewing angle, which is an angle between the object direction and the viewing direction, to the display section.

According to another aspect of the invention, there is provided a display system. The display system includes: a portable display device including a main body including a display section capable of displaying display data; an object direction confirmation section configured to confirm an object direction from the main body to an object; a viewing direction recognition section configured to recognize a viewing direction for viewing through the display section; and a management section configured to dispose the display data in a virtual display area wider than a display area of the display section. In the display system, the management section displays a part of the virtual display area in accordance with a viewing angle, which is an angle between the object direction and the viewing direction, to the display section.

According to still another aspect of the invention, there is provided a display method. The display method includes: confirming an object direction to an object from a portable main body including a display section capable of displaying display data; recognizing a viewing direction for viewing through the display section; and displaying a part of a virtual display area wider than a display area of the display section and including the display data disposed therein in accordance with a viewing angle, which is an angle between the object direction and the viewing direction, to the display section.

In the invention (the portable display device, the display system and the display method) configured in this manner, the portable display device includes a main body provided with a display section capable of displaying display data, and thus it is possible for an operator to view the surroundings through the display section of the portable display device. Accordingly, it is possible for the operator to confirm display data while viewing an object through the display section. At this time, displaying display data by the display section is controlled as follows.

That is to say, the display data is disposed in the virtual display area. A part of the virtual display area is then displayed by the display section in accordance with the viewing angle between an object direction from the main body to the object and the viewing direction of viewing through the display section. In such a configuration, when a direction of a field of view of the operator through the display section of the portable display device, that is to say, a viewing direction changes, a viewing angle also changes. Accordingly, the display section displays a part in accordance with the direction of the field of view of the operator out of the virtual display area. As a result, it is possible to set the display position of the display data by the display section in accordance with the direction of the field of view of the operator. Thereby, it becomes possible to display the display data to the portable display device in a display mode in accordance with the field of view of the operator.

Also, the portable display device may include a selection section capable of selecting the object, wherein the viewing direction recognition section confirms the object direction to the object selected by the selection section. With such a configuration, when an object is selected by the selection section, a viewing angle is set to the selected object, and a part of the virtual display area in accordance with this viewing angle is displayed by the display section. Accordingly, the operator selects the object in operation so that it is possible to display the display data in a suitable display mode for the object in operation to the display section.

Incidentally, if the viewing angle is further changed with a change in the direction of the field of view of the operator after the part of the virtual display area in accordance with the viewing angle is displayed by the display section, various modes are considered concerning how to display the virtual display area by the display section.

That is to say, the portable display device may be configured such that the management section changes a part of the virtual display area to be displayed on the display section with a change in the viewing angle. With such a configuration, when the viewing angle changes with a change in the direction of the field of view of the operator through the display section of the portable display device, a part of the virtual display area in accordance with the viewing angle after the change, that is to say, a part in accordance with the field of view of the operator after the change is displayed by the display section. Accordingly, it is possible to display the display data to the portable display device in a display mode in accordance with a change in the direction of the field of view of the operator.

Alternatively, the portable display device may be configured such that the management section has a fixed display mode for fixing a positional relationship between the display data to be displayed on the display section and the viewing direction. With such a configuration, the fixed display mode is performed so that it is possible to meet the needs of the operator in that the display data ought to be fixedly displayed regardless of a change in the field of view with operation.

Further, the portable display device may be configured such that the display section is capable of displaying a plurality of the display data, and the management section is capable of carrying out the fixed display mode for each of the display data. With such a configuration, it is possible for the operator to select the display data to be fixedly displayed in a fixed display mode, and thus the convenience of the operator is improved.

Also, the portable display device may be configured such that the management section changes a display mode of the display data of the display section with a change in the viewing angle. With such a configuration, when the viewing angle between the object direction and the viewing direction changes, the display mode of the display data changes. Accordingly, the operator confirms the display mode of the display data so that it is possible to make a guess at the positional relationship between the object direction and the viewing direction, in other words, the place of the object.

Also, the portable display device may be configured such that if the viewing angle is larger than a predetermined threshold value, the management section displays an identification mark indicating an existing direction of the object to the display section. With such a configuration, the operator confirms the identification mark so that it is possible to easily know the place of the object.

Also, the portable display device may further include a reference axis specification section specifying a reference axis, wherein the management section displays a part of the virtual display area on the display section in accordance with the viewing angle around the specified reference axis. With such a configuration, it is possible to display a part of the virtual display area in accordance with the direction of the field of view of the operator in the rotational direction with the reference axis as center to the display section. At this time, the portable display device may be configured such that specification of the reference axis parallel to a vertical direction is possible, or specification of the reference axis parallel to a horizontal direction is possible. Alternatively, both a reference axis parallel to a vertical direction, and a reference axis parallel to a horizontal direction may be specified.

Also, the portable display device may further include an input operation section configured to receive an input operation, wherein the management section is capable of changing disposition of the display data in the virtual display area in accordance with an input to the input operation section. With such a configuration, it is possible for the operator to operate the input operation section so as to suitably adjust the positions of the object and the display data, and thus to improve the convenience of the operator.

Also, the portable display device may be configured such that the viewing direction recognition section recognizes the viewing direction by the amount of movement of the main body with respect to the object direction. With such a configuration, when the main body carried by the operator moves with the movement of the direction of the field of view of the operator, the operator recognizes the viewing direction on the basis of the amount of movement. Accordingly, it is possible to change the position of the display data while the movement of the direction of the field of view of the operator is accurately synchronized with the viewing direction. As a result, it is possible to display the display data while suppressing uncomfortable feeling of the operator.

### BRIEF DESCRIPTION OF THE DRAWINGS

Embodiments of the invention will now be described by way of example only with reference to the accompanying drawings, wherein like numbers reference like elements.
Fig. 1 is a block diagram illustrating an example of a display system provided with an HMD according to the invention.
Fig. 2 is a block diagram illustrating an example of a configuration of a printer.
Fig. 3 is a diagram schematically illustrating an example of a mechanical configuration of the HMD.
Fig. 4 is a block diagram illustrating an example of an electrical configuration of the HMD in Fig. 3.
Fig. 5 is a block diagram illustrating an example of a configuration of a management server.
Fig. 6 is a diagram schematically illustrating an example of a virtual space set by a management section of the HMD.
Fig. 7 is a diagram schematically illustrating the virtual space in Fig. 6 in a superimposed manner on a real space.
Fig. 8 is a diagram illustrating states that change a display target range in accordance with a viewing angle.
Fig. 9 is a diagram illustrating another states that change a display target range in accordance with a viewing angle.

### DESCRIPTION OF EXEMPLARY EMBODIMENTS

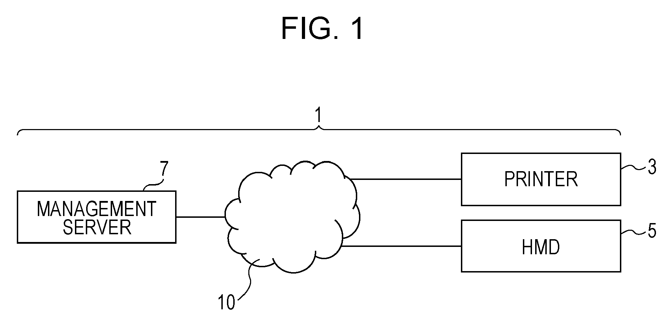

Fig. 1 is a block diagram schematically illustrating an example of a display system provided with an HMD according to the invention. A display system 1 includes a printer 3, which is an operation object of an operator, an HMD 5, which displays operation contents to the operator, and a management server 7, which manages the printer 3 and the HMD 5. The printer 3, the HMD 5 and the management server 7 are coupled to the Internet 10, respectively, and the management server 7 performs communication with the printer 3 and the HMD 5 via the Internet 10. In this regard, the Internet 10 is illustrated as an example of a communication line, and thus a specific configuration that achieves communications between the management server 7, and the printer 3 and the HMD 5, respectively is not limited to the Internet 10.

The display system 1 is suitable for supporting an operator in performing operation on the printer 3. That is to say, if an event, such as paper jam, an ink shortage, or the like occurs in the printer 3, the management server 7 identifies the operation contents that is ought to be performed by the operator against the event, and displays the operation contents corresponding to the HMD 5 worn by the operator. Thereby, the operator carries out the operation contents displayed on the HMD 5 worn by himself or herself so as to perform suitable operation in accordance with the event (elimination of paper jam, replenishment of ink, and the like) on the printer 3.

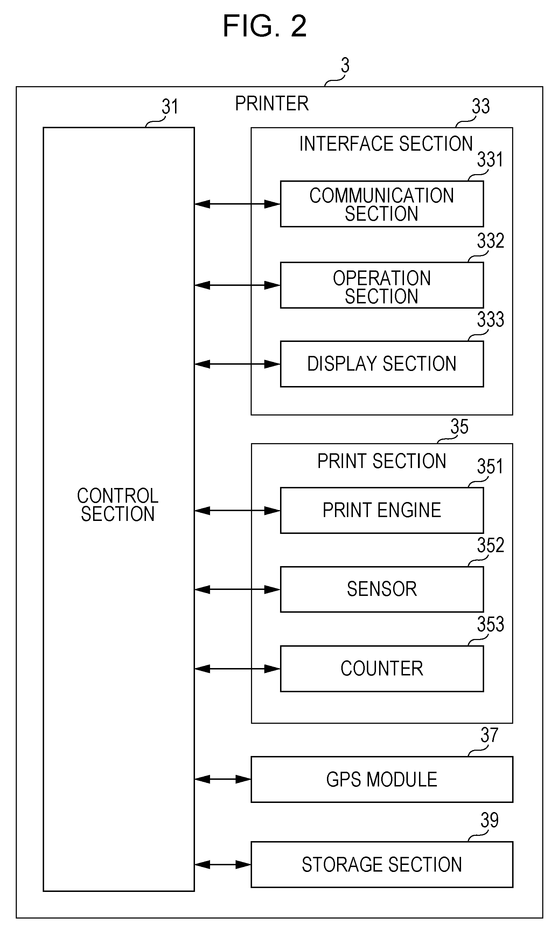

Fig. 2 is a block diagram illustrating an example of a configuration of a printer. The printer 3 includes a control section 31, an interface section 33, a print section 35, a GPS (Global Positioning System) module 37 and a storage section 39. The control section 31 is a computer including a CPU (Central Processing Unit) and a RAM (Random Access Memory), and integrally controls operation performed by the printer 3. Accordingly, the interface section 33, the print section 35, the GPS module 37 and the storage section 39 are operated under the control of the control section 31.

The interface section 33 performs an interface function with an external device or the operator. The communication section 331 is coupled to the Internet 10, and performs communication with the management server 7 via the Internet 10. Also, the operation section 332 includes a button, or the like that receives an input operation from the operator, and the display section 333 includes a display, or the like that displays various kinds of information concerning the printer 3 to the operator. In this regard, the operation section 332 and the display section 333 may be integrally configured by a touch panel, for example.

The print section 35 includes a print engine 351, a sensor 352 and a counter 353. The print engine 351 has a mechanical configuration for carrying out printing an image on a print medium. The print engine 351 discharges ink from a discharge head of an ink jet system onto a winding-type print medium (web) transported using a roll-to-roll method so as to print an image on the print medium. In this regard, the specific configuration of the print engine 351 is not limited to the example described here. Thus, the print engine 351 may print an image on a sheet-type print medium, or may print with toner using a laser system. The sensor 352 then detects the state of the print engine 351, and the counter 353 counts various numeric values that change with operation of the print engine 351.

As the states of the print engine 351, for example, a transport state of a print medium, an open or shut state of the cover of the main body, attachment states of various parts, and the like are provided. In order to detect these states, a sensor 352 is provided. Also, as the numeric values that change with the operation of the print engine 351, for example, an accumulated length of the printed web, a consumption amount of ink (or a remaining amount), an accumulated amount of rotation of a mechanical part that rotates (for example, a roller that transports a print medium), and the like are provided. In order to count these numeric values, various counters 353 are provided.

The GPS module 37 uses a satellite positioning system so as to detect the installation position of the printer 3. Also, the storage section 39 includes a storage medium, such as a ROM (Read Only Memory), an HDD (Hard Disk Drive), or an RAM, and stores various programs and data that are used by the printer 3.

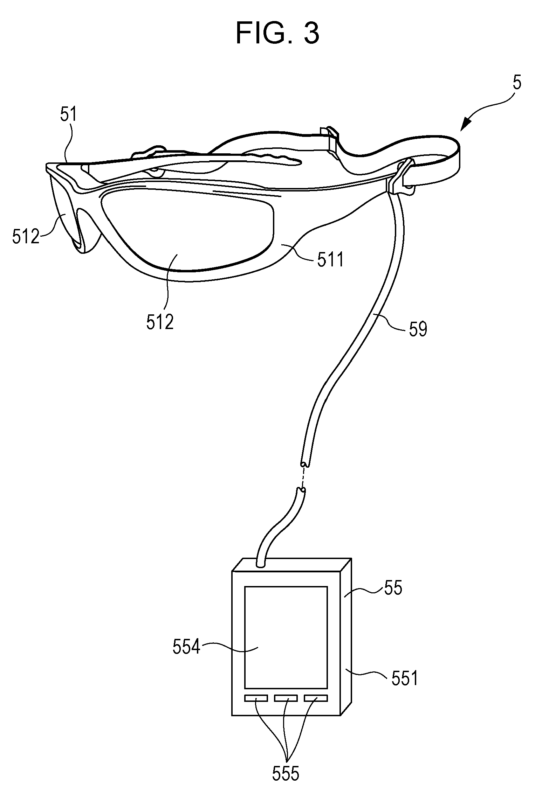

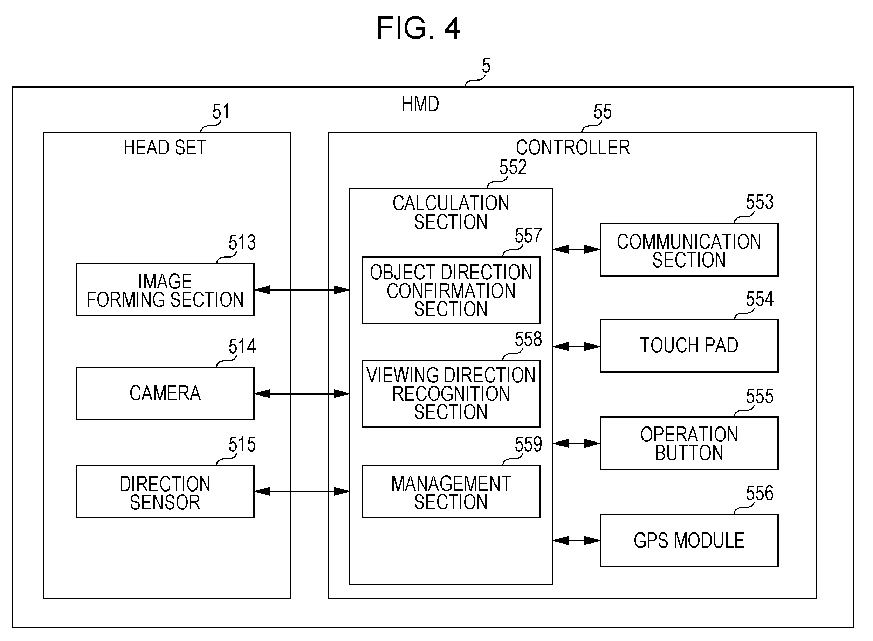

Fig. 3 is a diagram schematically illustrating an example of a mechanical configuration of the HMD. Fig. 4 is a block diagram illustrating an example of an electrical configuration of the HMD in Fig. 3. The HMD 5 includes a head set 51 worn by the operator, a portable controller 55, and a cable 59 that connects the head set 51 and the controller 55. The HMD 5 is a light transmission type HMD having the same configuration as that of the virtual image display device disclosed in JP-A-2014-219468 and JP-A-2014-225823, for example.

The head set 51 includes a glasses type frame 511 (main body) that is wearable on the head of the operator, and right and left lenses 512 attached to the frame 511. Each of the lenses 512 is positioned in front of respective one of right and left eyes of the operator wearing the frame 511, and transmits visible light. Accordingly, the operator who wears the head set 51 can view the surrounding state through each of the lenses 512. Also, a camera 514 that captures the image of the surrounding state, and a direction sensor 515 that detects the direction of the head set 51 are attached to the frame 511. In this regard, the direction of the head set 51 matches the direction of the front face of the glasses frame 511, and thus matches the direction of the face of the operator wearing the head set 51 on the head.

Further, the frame 511 has a built-in image forming section 513 that displays an image illustrating the operation contents, or the like of the operator. Accordingly, it is possible for the operator wearing the head set 51 to view the image displayed by the image forming section 513. In other words, it is possible for the head set 51 to display the image created by the image forming section 513 by superimposing the image on the surrounding state through the lens 512 to the operator. In this manner, the lens 512 and the image forming section 513 functions as an example of the "display section" of the invention. In this regard, the image forming section 513 may be of either a type that displays a virtual image or a type that forms an image on the retinas of the operator.

The controller 55 has a configuration in which a calculation section 552, a communication section 553, a touch pad 554, an operation button 555 and a GPS module 556 are attached to a portable housing 551 that can be carried by the operator in his or her clothing pocket, or the like, or in his or her hand. The calculation section 552 is a computer including a CPU and a RAM, and integrally performs calculation processing in the HMD 5. In this regard, the calculation section 552 executes a predetermined program so as to build an object direction confirmation section 557, a viewing direction recognition section 558 and a management section 559. The details of these operations will be described later.

The communication section 553 is coupled to the Internet 10, and performs communication with the management server 7 via the Internet 10. The touch pad 554 and the operation button 555 are individually function as a user interface. That is to say, when the operator performs an input operation on the touch pad 554 or the operation button 555, the calculation section 552 controls the image forming section 513 in accordance with the input operation. Thereby, it is possible to perform display control, such as changing the position or the contents of the image to be displayed to the operator in accordance with the input operation of the operator, or the like. The GPS module 556 uses a satellite positioning system so as to detect the position of the head set 51 of the HMD 5. At this time, the GPS module 556 and the head set 51 of the HMD 5 are located at near positions, and thus the position detected by the GPS module 556 may be used as the position of the HMD 5. Also, the GPS module 556 may detect a position using an antenna disposed in the head set of the HMD 5, which is not illustrated in Fig. 4 in order to detect the position of the HMD 5.

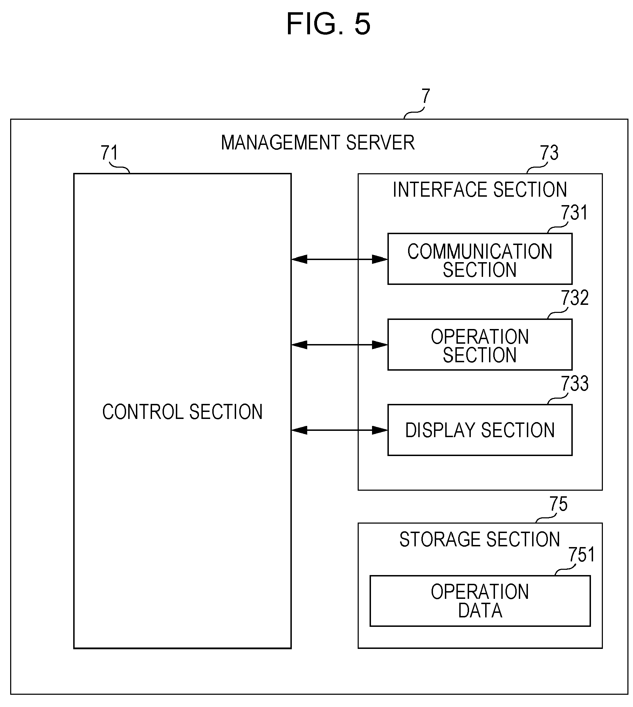

Fig. 5 is a block diagram illustrating an example of a configuration of a management server. The management server 7 includes a control section 71, an interface section 73 and a storage section 75. The control section 71 is a computer including a CPU and a RAM, and integrally controls the operation performed by the management server 7. Accordingly, the interface section 73 and the storage section 75 operate under the control of the control section 71.

The control section 71 manages information on the printer 3, which is an operation object of the operator. That is to say, the control section 71 receives a detection result of the sensor 352 from the printer 3 so as to obtain the status information indicating the state of the print engine 351 of the printer 3. Also, the control section 71 receives the counting result of the counter 353 from the printer 3 so as to obtain consumables information indicating the state of the consumables (the remaining amount of ink, the remaining lifetime of a part of rotating machine, and the like). Also, the control section 71 receives the detection result of the GPS module 37 from the printer 3 so as to obtain positional information indicating the position of the printer 3.

The interface section 73 performs interface functions with the external devices or the operator. The communication section 731 is coupled to the Internet 10, and performs communication with each of the printer 3 and the HMD 5 via the Internet 10. Also, the operation section 732 includes a keyboard, a mouse, and the like that receive an input operation from the operator. The display section 733 includes a display, or the like that displays various kinds of information to the operator. In this regard, the operation section 732 and the display section 733 may be integrally configured by a touch panel, for example.

The storage section 75 includes a storage medium, such as a ROM, an HDD or a RAM, and stores various programs and data that are used by the management server 7. For example, the storage section 75 stores operation data 751 indicating the contents of operation that ought to be performed on the event that has occurred in the printer 3.

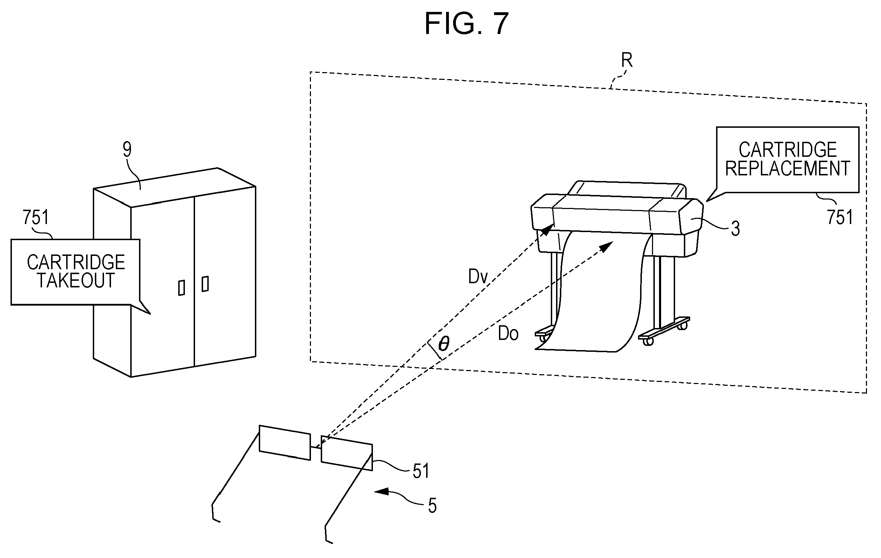

In the display system 1 as described above, when the management server 7 detects the occurrence of an event in the printer 3, the management server 7 transmits the operation data 751 indicating the operation contents corresponding to that event to the HMD 5. The calculation section 552 of the HMD 5 then causes the image forming section 513 to display the operation data 751 received through the communication section 553 so as to support the operation of the operator. Next, a detailed description will be given of the display control by the HMD 5 by illustrating an example of supporting the replacement operation of an ink cartridge of the printer 3, which has been taken out from a repository 9 (Fig. 7) in order to deal with an ink shortage that has occurred in the printer 3.

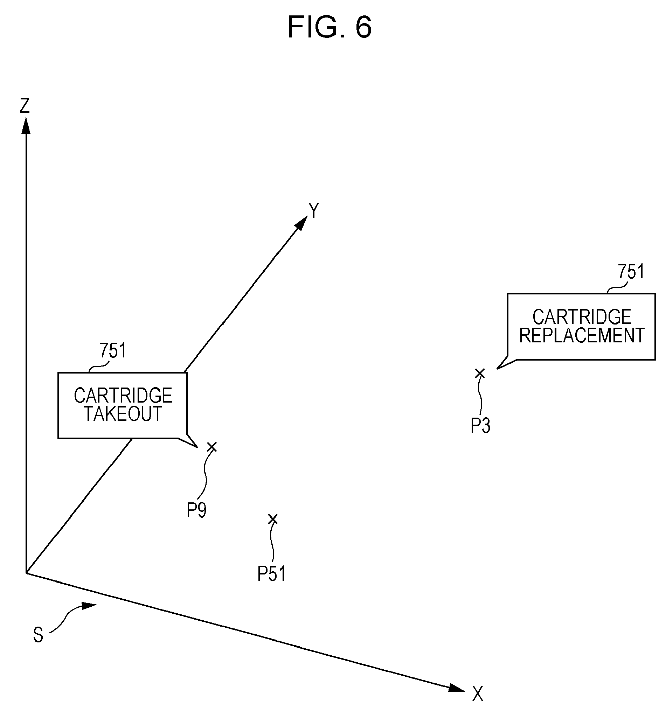

Fig. 6 is a diagram schematically illustrating an example of a virtual space set by a management section of the HMD. That is to say, the management section 559 of the HMD 5 sets a virtual space S around the HMD 5 at the time of performing display control of the operation data 751. The XYZ orthogonal coordinate system of the virtual space S is a global coordinate system having a Z-axis direction as the vertical direction. The management section 559 then plots positions P3, P51 and P9 of the printer 3, the head set 51 of the HMD 5 and the repository 9 of the ink cartridges in the real space, respectively, in the virtual space S.

Incidentally, the position P3 of the printer 3 is the position of a suitable representative point on the printer 3, and the management section 559 obtains the position P3 on the basis of the result of the reception of the output of the GPS module 37 of the printer 3 through the management server 7. The position P51 of the head set 51 of the HMD 5 is a suitable representative point on the head set 51 (for example, the position between the two lenses 512), and the management section 559 obtains the position P51 on the basis of the output of the GPS module 556. Also, the position P9 of the repository 9 is a suitable representative point on repository 9, and the management section 559 obtains the position P9 that is recorded in the management server 7 in advance.

Further, the management section 559 disposes each operation data 751 indicating the operation contents corresponding to an ink shortage (event) in the virtual space S. Specifically, the operation data 751 indicating the operation contents (cartridge replacement) to be carried out at the place of the printer 3 is disposed at a position satisfying a predetermined positional relationship with the position P3 of the printer 3. Also, the operation data 751 indicating the operation contents (cartridge takeout) to be carried out at the place of the repository 9 is disposed at a position satisfying a predetermined positional relationship with the position P9 of the repository 9. Thereby, each operation data 751 is fixed with respect to the global coordinate system defining the virtual space S. Incidentally, the disposition of the operation data 751 is carried out by matching a suitable representative point of the display area of the operation data 751 with the object position indicating the disposition destination in the global coordinate system.

The management section 559 then controls the image forming section 513 so as to display each operation data 751 in the respective display area assigned to each operation data 751. Thereby, it is possible to cause the operator to perceive that as if the operation data 751 is disposed adjacently to the printer 3 and the repository 9 that are viewed through the lens 512. In particular, the management section 559 performs the control described in the following in order to display an image in accordance with the field of view of the operator wearing the HMD 5.

Fig. 7 is a diagram schematically illustrating the virtual space in Fig. 6 in a superimposed manner on a real space. As illustrated in Fig. 7, as a result of the disposition of the operation data 751 described above, the operation data 751 indicating the operation contents at the place of the printer 3 is virtually disposed in the upper right corner of the printer 3 adjacently to the printer 3. Also, the operation data 751 indicating the operation contents at the place of the repository 9 is disposed on the left side of the repository 9 adjacently to the repository 9.

After virtually disposing each operation data 751 in this manner, the management section 559 causes the image forming section 513 to display a part in accordance with the field of view of the operator out of the virtual space S in cooperation with the object direction confirmation section 557 and the viewing direction recognition section 558. The object direction confirmation section 557 calculates an object direction Do from the head set 51 toward the printer on the basis of the position P51 of the head set 51 and the position P3 of the printer 3. Also, the viewing direction recognition section 558 detects the direction of the head set 51 indicated by the direction sensor 515 using the position P51 of the head set 51 as a starting point as a viewing direction Dv of the operator.

The management section 559 extracts a display target range R that exists in the viewing direction Dv from the head set 51 out of the virtual space S in which each operation data 751 is disposed, and causes the image forming section 513 to display the display target range R. Thereby, it is possible for the operator to perceive the display target range R that exists in the viewing direction Dv out of the virtual space S. Incidentally, it is possible to set the display target range R so as to include the average human field of view, for example, to have a predetermined size vertically and horizontally with the position P51 of the head set 51 as center as viewed from the viewing direction Dv. The management section 559 then changes the display target range R displayed by the image forming section 513 in accordance with a change in the viewing direction Dv according to the movement of the head of the operator, in other words, a change in the viewing angle θ between the viewing direction Dv and the object direction Do.

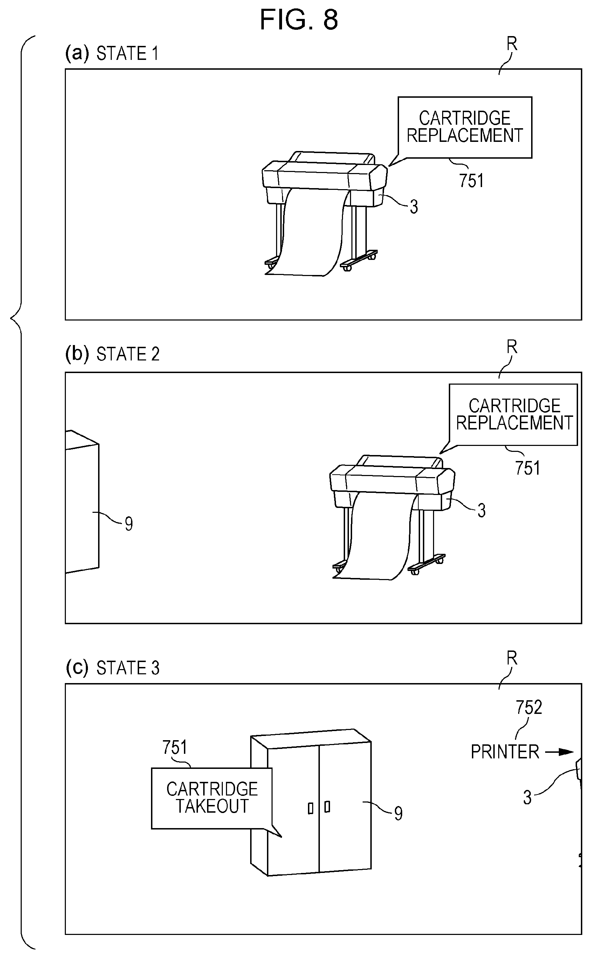

Fig. 8 is a diagram illustrating states that change a display target range in accordance with a viewing angle. Fig. 8 illustrates states in which the display target range R is superimposed on the surrounding area viewed through the lens 512, that is to say, the contents perceived by the operator. Fig. 8 illustrates the cases in which the operator viewed the printer 3, and then turned the head leftward from a state 1 to a state 3 in particular to view the repository 9. In this regard, in Fig. 8, it is assumed that the field of view of the operator matches the display target range R.

In the state 1 in Fig. 8, the operator wearing the head set 51 view the printer 3 substantially in the middle of the field of view through the lens 512. Also, the management section 559 causes the image forming section 513 to display the display target range R (in other words, the display target range R that exists ahead of the viewing direction Dv) in accordance with the viewing angle θ out of the virtual space S. Thereby, the display target range R with the position P3 of the printer 3 as center is displayed by the image forming section 513. As a result, the operator perceives the operation data 751 disposed virtually in the vicinity of the printer 3, and thus it is possible for the operator to grasp the operation (cartridge replacement) that should be done at the place of the printer 3.

In the state 2, the operator turns his or her head left so as to move the field of view leftward. Accordingly, compared with the state 1, the position of the printer 3 moves rightward and the repository 9 appears in the left end of the field of view in the field of view of the operator. Also, when the viewing direction Dv moves leftward with the move of the field of view of the operator, the display target range R also moves leftward in the virtual space S. As a result, the operation data 751 (cartridge replacement) positioned in the virtual space S moves rightward with the printer 3 in the field of view of the operator.

In the state 3, the operator further turns his or her head left so as to move the field of view leftward. Accordingly, compared with the state 2, almost all of the printer 3 goes rightward out of the field of view, and the repository 9 moves substantially to the center in the field of view of the operator. Also, the display target range R moves leftward in the virtual space S so that the operation data 751 (cartridge takeout) positioned in the virtual space S moves rightward with the repository 9 in the field of view of the operator.

In this manner, the management section 559 virtually positions each operation data 751 with respect to the global coordinate system, and at the same time causes image forming section 513 to display the display target range R that exists in the viewing direction Dv in the global coordinate system. Thereby, it is possible for the operator to perceive that as if each operation data 751 having a fixed positional relationship with the printer 3 or the repository 9 exists in a real space.

Incidentally, in the state 3, the printer 3 is almost out of the field of view of the operator. Thus the management section 559 performs control in order for the operator to easily grasp the position of the printer 3, which is the operation object. Specifically, the management section 559 compares the viewing angle θ with the first threshold value θ1. If the viewing angle θ is larger than the first threshold value θ1, the management section 559 causes the image forming section 513 to display an indicator 752 indicating the direction of the existence of the printer 3 (on the contrary, if the viewing angle θ is smaller than the first threshold value θ1, the indicator 752 is not displayed). Accordingly, the operator confirms the indicator 752 displayed in the display target range R so that it is possible for the operator to easily grasp the position of the printer 3.

As described above, in the present embodiment, the HMD 5 includes the head set 51 provided with image forming section 513 capable of displaying the operation data 751. It is possible for the operator to perceive the operation data 751 displayed by the image forming section 513, which is superimposed on the surroundings viewed through the lens 512 of the head set 51. Accordingly, it is possible for the operator to view the printer 3 (object) through the lens 512, and at the same time to confirm the operation data 751. At this time, the display of the operation data 751 by the image forming section 513 is controlled as follows.

That is to say, the operation data 751 is disposed in the virtual space S. A part of the virtual space S (display target range R) in accordance with the viewing angle θ between the object direction Do from the head set 51 to the printer 3 and the viewing direction Dv of viewing through the lens 512 is displayed by the image forming section 513. With such a configuration, the viewing angle θ changes as the direction of the field of view of the operator through the lens 512 of the HMD 5 changes, that is to say, as the viewing direction Dv changes. Accordingly, the image forming section 513 displays a part (display target range R) in accordance with the direction of the field of view of the operator out of the virtual space S. As a result, it is possible to set the display position of the operation data 751 by the image forming section 513 to a direction in accordance with the field of view of the operator. Thereby, it becomes possible to display the operation data 751 on the HMD 5 in the display mode in accordance with the direction of the field of view of the operator.

Also, the management section 559 changes a part (display target range R) of the virtual space S, which is displayed by the image forming section 513 with a change in the viewing angle θ. Accordingly, when the viewing angle θ changes with a change in the direction of the field of view of the operator through the lens 512 of the HMD 5, a part of the virtual space S in accordance with the viewing angle θ after the change, that is to say, a part (display target range R) in accordance with the field of view of the operator after the change is displayed by the image forming section 513. Accordingly, it is possible to display the operation data 751 on the HMD 5 in the display mode in accordance with a change in the direction of the field of view of the operator.

Also, the viewing direction recognition section 558 recognizes the viewing direction Dv by the amount (angle) of movement (rotation) of the head set 51 with respect to the object direction Do. At this time, initialization ought to be carried out on the basis of the object direction Do, and a relative angle moved (rotated) from the object direction Do ought to be the viewing direction Dv. With such a configuration, when the head set 51 worn on the head of the operator moves with the movement of the direction of the field of view of the operator, the viewing direction Dv is recognized on the basis of the amount of movement. Accordingly, it is possible to change the position of the operation data 751 while the movement of the direction of the field of view of the operator is accurately synchronized with the viewing direction Dv. As a result, it is possible to display the operation data 751 while suppressing uncomfortable feeling of the operator.

Also, if the viewing angle θ is larger than a predetermined threshold value, the management section 559 causes the image forming section 513 to display the indicator 752 indicating the existence of the printer 3. With such a configuration, it is possible for the operator to confirm the indicator 752 so as to easily know the place of the printer 3.

In this manner, in the present embodiment, the HMD 5 corresponds to an example of the "portable display device" of the invention, the head set 51 corresponds to an example of the "main body" of the invention, the lens 512 and the image forming section 513 function in cooperation with each other as an example of the "display section" of the invention, the object direction confirmation section 557 corresponds to an example of the "object direction confirmation section" of the invention, the viewing direction recognition section 558 corresponds to an example of the "viewing direction recognition section" of the invention, the management section 559 corresponds to an example of the "management section" of the invention, the operation data 751 corresponds to an example of the "display data" of the invention, the virtual space S corresponds to an example of the "virtual display area" of the invention, the display target range R corresponds to an example of "a part of the virtual display area" of the invention, the object direction Do corresponds to an example of the "object direction" of the invention, the viewing direction Dv corresponds to an example of the "viewing direction" of the invention, the viewing angle θ corresponds to an example of the "viewing angle" of the invention, the indicator 752 corresponds to an example of the "identification mark" of the invention, and the first threshold value θ1 corresponds to an example of the "threshold value" of the invention.

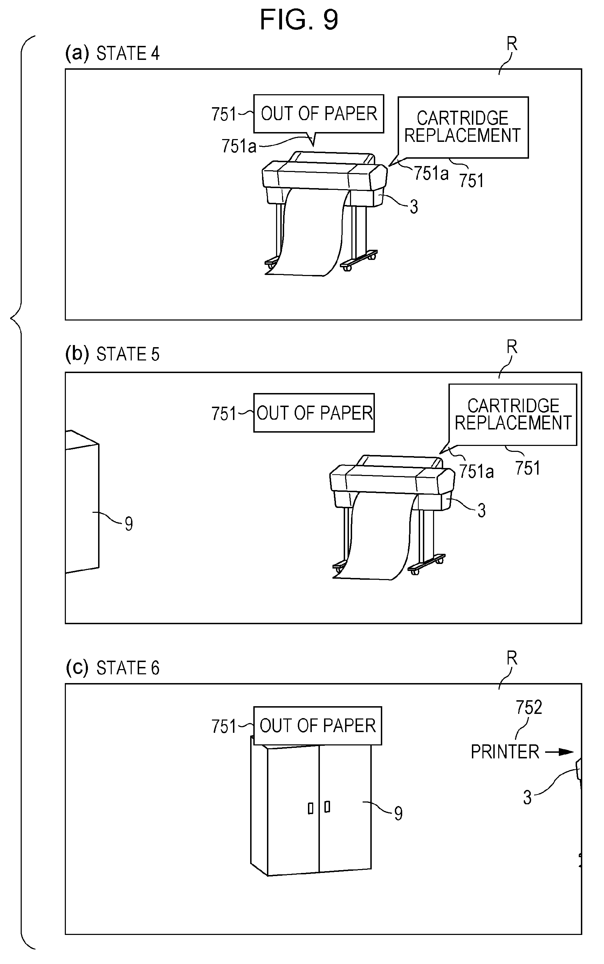

In this regard, the invention is not limited to the above-described embodiment, and it is possible to make various changes to the above-described embodiment without departing from the spirit and scope of the invention. Fig. 9 is a diagram illustrating another states that change a display target range in accordance with a viewing angle. Fig. 9 illustrates a state in which the display target range R is superimposed on the surroundings viewed through the lens 512, that is to say, the contents perceived by the operator. In particular, from a state 4 to a state 6, an example in which the operator viewed the printer 3 and then turned his or her head left so as to view the repository 9 is illustrated. In this regard, in Fig. 9, it is assumed that the field of view of the operator substantially matches the display target range R.

The main difference between the example in Fig. 8 and the example in Fig. 9 is the point in that out of paper (event) has occurred in the printer 3, and the HMD 5 supports the operation to handle the out of paper. Thus, in the following, a description will be given with a focus on the different point with the example in Fig. 8. However, it is as a matter of course that the same advantages are obtained by having a common configuration with the example in Fig. 8.

In the state 4 in Fig. 9, the operator wearing the head set 51 views the printer 3 substantially in the center of the field of view through the lens 512, and thus the display target range R having the position P3 of the printer 3 is displayed by the image forming section 513. As a result, the operator perceives two items of operation data 751 (cartridge replacement and out of paper), which are virtually disposed in the vicinity of the printer 3. Further, in the example in Fig. 9, the operator operates the touch pad 554 and the operation button 555 so as to determine one item of the operation data 751 (the operation data 751 indicating out of paper) to be displayed in the fixed display mode.

In the fixed display mode, the management section 559 releases the disposition of the selected operation data 751 in the global coordinate system, and fixes the position of the operation data 751 in the local coordinate system of the head set 51. Thereby, as viewed from the global coordinate system, the display position of the operation data 751 is changed with a change in the viewing direction Dv. On the other hand, as viewed from the local coordinate system of the head set 51, the display position of the operation data 751 is fixed. Incidentally, fixing the operation data 751 is carried out by matching a suitable representative point of the display area of the operation data 751 with the object position indicating the disposition destination in the local coordinate system of the head set 51.

As a result, in the state 5 and the state 6, the operation data 751 indicating out of paper is fixedly displayed in the upper center of the display target range R without depending on the change in the field of view of the operator. At this time, the management section 559 changes the display mode of the operation data 751 indicating out of paper in accordance with a change in the field of view of the operator. Specifically, the management section 559 compares the viewing angle θ with the second threshold value θ2. If the viewing angle θ is smaller than or equal to the second threshold value θ2, the management section 559 provides the operation data 751 indicating out of paper with an indicator 751a indicating the position of the printer 3. On the other hand, if the viewing angle θ is larger than the second threshold value θ2, the management section 559 does not provide the operation data 751 indicating out of paper with the indicator 751a.

In this manner, in the example in Fig. 9, the management section 559 has the fixed display mode, in which the positional relationship between the operation data 751 displayed by the image forming section 513 and the viewing direction Dv is fixed. Accordingly, by performing the fixed display mode, it is possible to accurately respond to the needs of the operator for fixedly displaying the operation data 751 without depending on a change in the field of view that is accompanied by the operation.

Further, the image forming section 513 is capable of displaying a plurality of operation data 751 on the printer 3, and the management section 559 is capable of performing the fixed display mode for each operation data 751. With such a configuration, it is possible for the operator to select operation data 751 to be fixedly displayed in the fixed display mode, and thus the convenience of the operator is improved. In other words, in the example in Fig. 9, it is possible to selectively perform a first mode, in which the operation data 751 is disposed in the global coordinate system, and the display target range R to be displayed on the image forming section 513 is changed in accordance with a change in the viewing angle θ, and a second mode (fixed display mode), in which the operation data 751 is disposed in the local coordinate system in order to fix the positional relationship between the operation data 751 and the viewing direction Dv.

Also, the management section 559 changes the display mode of the operation data 751 on the image forming section 513 with a change in the viewing angle θ. With such a configuration, when the viewing angle θ between the object direction Do and the viewing direction Dv changes, the display mode of the operation data 751 changes. Accordingly, the operator confirms the display mode of the operation data 751 so as to get the positional relationship between the object direction Do and the viewing direction Dv, in other words, to make a guess at the place of the printer 3.

Incidentally, in the above-described embodiment, the example is illustrated in the case of supporting the operation performed on one printer 3. However, it is also possible to apply the invention to the situation where the operator manages a plurality of printers 3. In this case, a configuration ought to be made such that one printer 3 can be selected from the plurality of printers 3. Specifically, the operator operates the touch pad 554 and the operation button 555 (the selection section) so as to select one printer 3 out of the plurality of printer 3, and the object direction confirmation section 557 confirms the object direction Do to the selected printer 3.

With such a configuration, when a printer 3 is selected, a viewing angle θ is set to the selected printer 3, and a part (display target range R) of the virtual space S in accordance with the viewing angle θ is displayed by the image forming section 513. Accordingly, the operator selects a printer 3 in operation so that the operation data 751 can be displayed on the image forming section 513 in a suitable display mode for the printer 3 in operation.

Also, the position at which the operation data 751 is disposed in the virtual space S can be configured so as to be suitably changed by the operator. Specifically, when the operator performs an input operation on the touch pad 554 and the operation button 555 (input operation section), the management section 559 changes the position of the operation data 751 in the virtual space S in accordance with the input operation. With such a configuration, the operator performs an input operation so that the positional relationship between the printer 3 and the operation data 751 can be suitably adjusted. For example, it is possible to display the operation data 751 at a desired position, such as above, below, on the right and left of the printer 3. As a result, the convenience of the operator is improved.

Also, a detailed description has not been given of how to obtain the viewing angle θ in particular, but various modes are considered. That is to say, the management section 559 may obtain the viewing angle θ around a reference axis parallel to the vertical direction. In this case, the management section 559 recognizes the angle between the object direction Do and the viewing direction Dv in a planar view from the extending direction of the reference axis, that is to say, the vertical direction as the viewing angle θ. In the examples in Fig. 8 and Fig. 9, such a recognition method of the viewing angle θ is carried out. Thereby, it is possible to change the display target range R in accordance with the movement of the field of view of the operator in the horizontal direction in order to suitably control the display position of the operation data 751.

Alternatively, the management section 559 may obtain the viewing angle θ around a reference axis parallel to the horizontal direction. In this case, the management section 559 recognizes the angle between the object direction Do and the viewing direction Dv in a planar view from the extending direction of the reference axis, that is to say, the horizontal direction as the viewing angle θ. Thereby, it is possible to change the display target range R in accordance with the movement of the field of view of the operator in the vertical direction in order to suitably control the display position of the operation data 751. Further, the management section 559 may individually have a reference axis parallel to the vertical direction and a reference axis parallel to the horizontal direction, and may recognize the viewing angle θ around each of the reference axes. Thereby, it is possible to change the display target range R in accordance with the movement of the field of view of the operator in the vertical direction and in the horizontal direction individually in order to suitably control the display position of the operation data 751.

Also, the configuration may be made such that the operator can specify the reference axis. Specifically, the operator performs a specified operation on the touch pad 554 and the operation button 555 (the reference axis specification section), and the management section 559 recognizes the viewing angle θ around the reference axis specified by the operation. At this time, the configuration may be made such that the reference axis parallel to the vertical direction can be specified, or the reference axis parallel to the horizontal direction can be specified. Alternatively, the configuration may be made such that both the reference axis parallel to the vertical direction, and the reference axis parallel to the horizontal direction can be specified.

Also, the functions of the object direction confirmation section 557, the viewing direction recognition section 558 and the management section 559 in the above-described embodiment may be installed in the control section 71 of the management server 7. If the configuration is made in this manner, the display system 1 corresponds to an example of the "display system" of the invention. Also, the functions of the management server may be installed in the printer 3 or the HMD 5. The communication with the management server is not limited to the Internet 10, and may be wireless connection, wired connection (LAN and USB), or the like.

Also, the case of using the printer 3 as the "object" of the invention, and supporting the operator performing the operation on the printer 3 has been exemplified. However, in the case of supporting the operation of the operator who engages in medical care, welfare, work at a construction site, or the like, it is also possible to suitably apply the invention by assuming various items as the "objects".

The foregoing description has been given by way of example only and it will be appreciated by a person skilled in the art that modifications can be made without departing from the scope of the present invention as defined by the claims.

## Claims

1. A portable display device comprising:
a portable main body including a display section capable of displaying display data;
an object direction confirmation section configured to confirm an object direction from the main body to an object;
a viewing direction recognition section configured to recognize a viewing direction for viewing through the display section; and
a management section configured to dispose the display data in a virtual display area wider than a display area of the display section,
wherein the management section displays a part of the virtual display area in accordance with a viewing angle, the viewing angle being an angle between the object direction and the viewing direction, to the display section.

2. The portable display device according to claim 1, further comprising
a selection section capable of selecting the object,
wherein the viewing direction recognition section confirms the object direction to the object selected by the selection section.

3. The portable display device according to claim 1,
wherein the management section changes a part of the virtual display area to be displayed on the display section with a change in the viewing angle.

4. The portable display device according to claim 1,
wherein the management section changes a display mode of the display data of the display section with a change in the viewing angle.

5. The portable display device according to claim 1,
wherein the management section has a fixed display mode for fixing a positional relationship between the display data to be displayed on the display section and the viewing direction.

6. The portable display device according to claim 5,
wherein the display section is capable of displaying a plurality of the display data, and
the management section is capable of carrying out the fixed display mode for each of the display data.

7. The portable display device according to claim 1,
wherein if the viewing angle is larger than a predetermined threshold value, the management section displays an identification mark indicating an existing direction of the object to the display section.

8. The portable display device according to claim 1, further comprising
a reference axis specification section specifying a reference axis,
wherein the management section displays a part of the virtual display area on the display section in accordance with the viewing angle around the specified reference axis.

9. The portable display device according to claim 8,
wherein specification of the reference axis parallel to a vertical direction is possible.

10. The portable display device according to claim 8,
wherein specification of the reference axis parallel to a horizontal direction is possible.

11. The portable display device according to claim 1, further comprising
an input operation section configured to receive an input operation,
wherein the management section is capable of changing disposition of the display data in the virtual display area in accordance with an input to the input operation section.

12. The portable display device according to claim 1,
wherein the viewing direction recognition section recognizes the viewing direction by the amount of movement of the main body with respect to the object direction.

13. A display system comprising:
a portable display device including a main body including a display section capable of displaying display data;
an object direction confirmation section configured to confirm an object direction from the main body to an object;
a viewing direction recognition section configured to recognize a viewing direction for viewing through the display section; and
a management section configured to dispose the display data in a virtual display area wider than a display area of the display section,
wherein the management section displays a part of the virtual display area in accordance with a viewing angle, the viewing angle being an angle between the object direction and the viewing direction, to the display section.

14. A display method comprising:
confirming an object direction to an object from a portable main body including a display section capable of displaying display data;
recognizing a viewing direction for viewing through the display section; and
displaying a part of a virtual display area wider than a display area of the display section and including the display data disposed therein in accordance with a viewing angle, the viewing angle being an angle between the object direction and the viewing direction, to the display section.
